# EUROPEAN PATENT APPLICATION

(11) **EP 4 817 908 A1**
(43) Date of publication of application: **07.10.2026**
(21) Application number: 24897754.8
(22) Date of filing: 22.05.2024
(51) Int. Cl.: B60H 1/22, F24H 1/14, F24H 9/1818, H05B 3/02, H05B 3/42, H05B 3/00

(54) **HIGH-VOLTAGE HEATER OF ELECTRIC VEHICLE HAVING HEAT-GENERATING FLOW PATH STRUCTURE OF HEATER RING**

(30) Priority: 28.11.2023 KR 20230167783
(71) Applicant: Sung Chang Autotech Co., Ltd., Anseong-si, Gyeonggi-do 17556 (KR)
(72) Inventor: JUNG, Ki Yeon, Hwaseong-si Gyeonggi-do 18477 (KR); KIM, Yang Jun, Hwaseong-si Gyeonggi-do 18394 (KR); LEE, Jae Oh, Incheon 21580 (KR); RYU, Si Heon, Pyeongtaek-si Gyeonggi-do 18033 (KR); BANG, Moo Hyuk, Seoul 05837 (KR); KIM, Hyo Jin, Cheonan-si Chungcheongnam-do 31211 (KR)
(74) Representative: Richly & Ritschel Patentanwälte PartG mbB
(86) International application number: PCT/KR2024/006895
(87) International publication number: WO 2025/116153

(57) **Abstract**

The present invention relates to a high-voltage heater for an electric vehicle having a heat-generating flow path structure of a heater ring, and more particularly, to a high-voltage heater for an electric vehicle having a heat-generating flow path structure of a heater ring, in which installation and removal of a heating element are facilitated by the heater ring and the heat-generating flow path structure is improved. According to an embodiment of the present invention, a high-voltage heater for an electric vehicle having a heat-generating flow path structure of a heater ring includes: a zigzag flow path pipe installed in a flow path formed on an inner lower surface of a heater body; a plurality of heater rings inserted into a plurality of fitting grooves of the flow path pipe and configured to generate heat by power supplied from an external source; and a protective layer formed on an upper portion of the flow path pipe to protect the plurality of heater rings, wherein the zigzag flow path pipe may include a plurality of straight flow paths and a plurality of curved flow paths.

## Description

### [Technical Field]

The present invention relates to a high-voltage heater for an electric vehicle having a heat-generating flow path structure of a heater ring, and more particularly, to a high-voltage heater for an electric vehicle having a heat-generating flow path structure of a heater ring, in which installation and removal of a heating element are facilitated by the heater ring and the heat-generating flow path structure is improved.

### [Background Art]

Unless otherwise indicated in this specification, the contents described in this section are not prior art with respect to the claims of the present application, and their inclusion in this section should not be construed as constituting prior art.

Recently, with an increase in the popularity of electric vehicles, the demand and supply of automotive electronics are rapidly increasing. These electric vehicles are equipped with numerous electronic components. In addition, electric vehicles are required to include internal heating and air conditioning systems, such that heating members functioning as electric heaters are essential. In recent years, approaches have been adopted that increase heat output while reducing installation space. However, structural design challenges remain in achieving a maximum heat-generating area within a limited space.

In particular, it is important to use materials having high thermal conductivity for flow path pipes used to heat a fluid flowing therein. However, application thereof is limited due to cost issues associated with expensive materials. The design structure of a flow path for maximizing a heat transfer area of the flow path pipes, and the corresponding design of an electric heating element for electrically heating the flow path pipes, have also emerged as significant issues.

In this regard, a fluid heater disclosed in Korean Patent Laid-Open Publication No. 10-2021-0024967 (published on March 8, 2021) has a configuration in which power is applied to a heating pattern, which is a printed layer having an electric resistor formed on a separate heating plate, and heat generated by the heating pattern heats a fluid flowing through a flow path forming portion of a main body. However, the fluid heater is required to be provided with a circuit board having an electric circuit for heating the heating pattern of the separate heating plate. In addition, due to a structure for connecting terminals and electrodes, the overall configuration becomes complex, and as a result, production costs are considerably increased.

In addition, a band heater for a manifold resin guide tube disclosed in Korean Patent Registration No. 10-1561004 (published on October 15, 2015) has a configuration in which a heater wire is inserted into a fitting groove of a circular pipe-shaped heater body in a zigzag pattern to prevent resin within the manifold from solidifying, and power is applied to cause the heater wire to generate heat, thereby heating the resin guide tube inside the circular pipe heater body. However, this heater requires a significant amount of time and cost because it is difficult to mill a zigzag curved portion of the fitting groove of the heater body. Even when the heater wire, which is a heating element, is inserted, bending that occurs while changing a direction of extension causes distortion and deformation of the shape. In addition, such deformation may lead to abnormal conditions, and problems such as reduced durability of the heater wire material may occur.

### {Prior Art Document}

### [Patent Document]

(Patent Document 1) Korean Patent Laid-Open Publication No. 10-2021-0024967 (Published March 8, 2021)
(Patent Document 2) Korean Patent Registration No. 10-1561004 (Published October 15, 2015)

### [Summary of Invention]

### [Problems to be Solved by Invention]

The present invention has been made to address the above-described problems of the prior art with respect to a high-voltage heater for an electric vehicle, and an object of the present invention is to provide a high-voltage heater for an electric vehicle having an improved heat-generating flow path structure of a heater ring, in which a heater ring is formed on an outer surface of a circular pipe through which a fluid flows, instead of a planar heating element having a printed layer, to generate heat, thereby simplifying an overall structure, facilitating manufacturing, increasing a heat transfer area of a flow path pipe, and enhancing a heating effect.

In addition, the technical problems described above are not limited to the foregoing, and other technical problems may be derived from the following description.

### [Means for Solving Problems]

A high-voltage heater for an electric vehicle having a heat-generating flow path structure of a heater ring according to an embodiment of the present invention may include: a zigzag flow path pipe installed in a flow path formed on an inner lower surface of a heater body; a plurality of heater rings inserted into a plurality of fitting grooves of the flow path pipe and configured to generate heat by power supplied from an external source; and a protective layer formed on an upper portion of the flow path pipe to protect the plurality of heater rings, wherein the zigzag flow path pipe may include a plurality of straight flow paths and a plurality of curved flow paths.

According to a preferred embodiment of the present invention, the flow path pipe may be made of metal and may be formed by extrusion, and the fitting grooves on an outer surface thereof may be formed by turning.

According to a preferred embodiment of the present invention, the plurality of heater rings may be electrically connected to each other in series or in parallel by power supply lines.

According to a preferred embodiment of the present invention, the heater ring and the fitting groove of the flow path pipe may have an interference-fit coupling structure, and the heater ring may be inserted into the fitting groove having an opening formed to be relatively narrower than an inner portion thereof, thereby preventing the heater ring from being easily detached or displaced.

According to a preferred embodiment of the present invention, a material of the flow path pipe may include any one selected from aluminum, copper, or an alloy of these metals having high thermal conductivity.

According to a preferred embodiment of the present invention, the protective layer of the flow path pipe may include an insulating material.

According to a preferred embodiment of the present invention, a plurality of sawtooth-shaped grooves may be formed on an inner surface of the flow path pipe to extend in a longitudinal direction, and the plurality of grooves may be densely arranged in a circumferential direction of the flow path pipe.

According to a preferred embodiment of the present invention, a plurality of micro concave portions or micro convex portions may be formed on the inner surface of the flow path pipe.

### [Advantageous Effects]

According to the present invention, a heater ring is formed on an outer surface of a circular pipe through which a fluid flows, a heat transfer area of an inner surface is increased, and a protective layer of an insulating material is formed, thereby providing a simple overall structure, facilitating manufacturing, and enhancing a heating effect, as well as providing economical effects such as improved productivity and reduced costs.

The effects of the present invention are not limited to the above-described effects, and should be understood to include all effects that can be inferred from the detailed description of the present invention or the configurations of the invention set forth in the claims.

### [Brief Description of Drawings]

FIG. 1 is a schematic exploded perspective view illustrating a high-voltage heater having a heat-generating flow path structure of a heater ring according to an embodiment of the present invention.
FIG. 2 is a perspective view illustrating a flow path pipe (a) and a heater ring (b) of the high-voltage heater having a heat-generating flow path structure of a heater ring according to an embodiment of the present invention.
FIG. 3 is a side view illustrating the flow path pipe of the high-voltage heater having a heat-generating flow path structure of a heater ring according to an embodiment of the present invention.
FIG. 4 is a cross-sectional view illustrating the flow path pipe of the high-voltage heater having a heat-generating flow path structure of a heater ring according to an embodiment of the present invention, taken along a vertical axis.
FIG. 5 is a cross-sectional view illustrating the flow path pipe of the high-voltage heater having a heat-generating flow path structure of a heater ring according to an embodiment of the present invention, taken along a longitudinal direction.

### [Mode for Carrying out Invention]

Hereinafter, a high-voltage heater for an electric vehicle having a heat-generating flow path structure of a heater ring according to a preferred embodiment will be described in detail with reference to the accompanying drawings.

For reference, in the drawings described below, each component may be omitted or schematically illustrated for convenience and clarity, and dimensions of each component do not necessarily reflect actual dimensions. Furthermore, the same reference numerals refer to the same components throughout the specification, and reference numerals for the same components may be omitted in individual drawings.

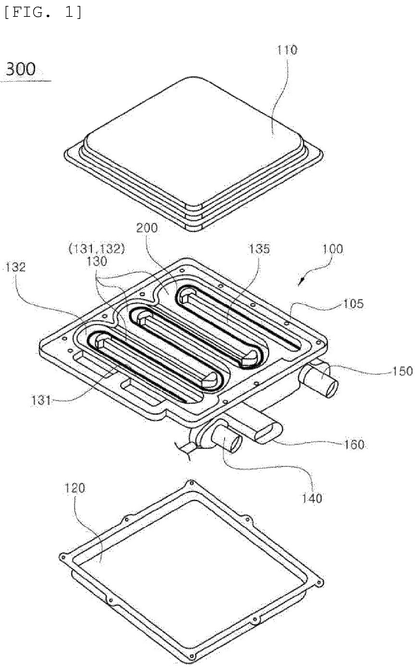

Referring to FIGS. 1 to 4, a high-voltage heater 300 for an electric vehicle having a heat-generating flow path structure of a heater ring according to an embodiment of the present invention may include: a zigzag flow path pipe 200 installed in a flow path 130 formed on an inner lower surface 105 of a heater body 100; a plurality of heater rings 220 inserted into a plurality of fitting grooves 210 of the flow path pipe 200 and configured to generate heat by power supplied from an external source; and a protective layer 240 formed on an upper portion of the flow path pipe 200 to protect the plurality of heater rings 220, wherein the zigzag flow path pipe 200 may include a plurality of straight flow paths 131 and a plurality of curved flow paths 132.

As illustrated in FIG. 1, the high-voltage heater 300 for an electric vehicle of the present invention generally includes the heater body 100, an upper cover 110, and a lower cover 120. The flow path 130 having an "S" shape is formed in a zigzag pattern on the lower surface 105 of the heater body 100, in which the flow path pipe 200 is arranged and seated.

A fluid introduced through a fluid inlet port 140 is heated as it flows through an interior of the flow path pipe 200. That is, the fluid is heated by the heater ring 220, which generates heat as power is applied thereto. The heated fluid may then be delivered to an air conditioning device for heating through a fluid outlet port 150. In addition, the fluid may be supplied to electrical components or devices that require maintenance at a predetermined temperature in order to prevent performance degradation.

In addition, when the flow path pipe 200 is arranged in a zigzag pattern, a plurality of partition walls 135 are disposed between the flow path pipe 200 and the flow path pipe 200 adjacent thereto. That is, the flow path pipe 200 disposed with the partition wall interposed therebetween may be easily and securely aligned on the lower surface 105 of the heater body.

Furthermore, as illustrated in the heater body 100 of FIG. 1, when the flow path pipe 200 is arranged in a zigzag pattern in the flow path 130, it may include the straight flow path 131 formed to extend longitudinally, and the curved flow path 132 formed to extend in a curved shape with the partition wall 135 interposed therebetween while changing a direction of extension.

Here, the circular heater ring 220 inserted into the fitting groove 210 formed on an outer circumference of the flow path pipe 200 of the present invention is configured to prevent distortion or deformation of a shape of the circular heater ring 220, even when the flow path pipe 200 is bent and deformed by the curved flow path 132. Therefore, durability is enhanced, and an advantage is provided in that abnormal conditions of a conventional heating element caused by shape distortion can be alleviated.

In addition, in the heater body 100, power for causing the heater ring 220 inserted into the fitting groove formed on the outer circumference of the flow path pipe 200 to generate heat is connected to a terminal 225 of the heater ring 220, and a connector 160 for connecting the power source to the terminal may be configured for high-voltage connection.

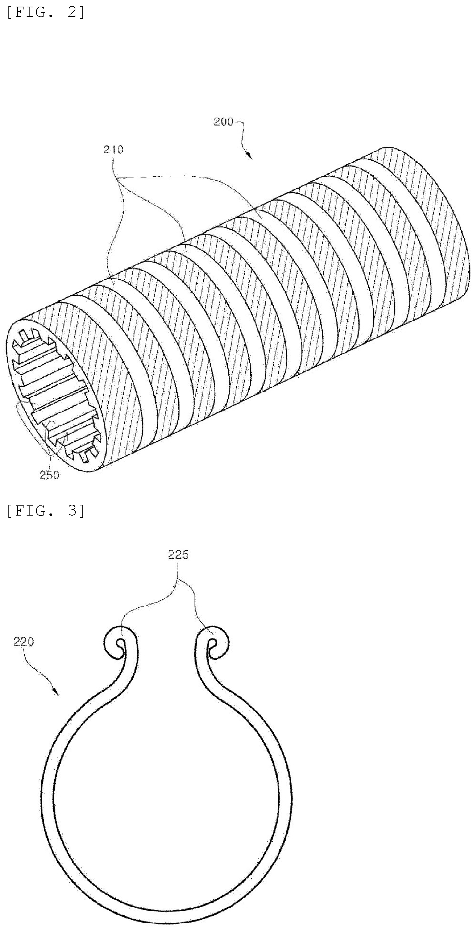

The flow path pipe 200 illustrated in FIGS. 2 and 3 is made of metal and is formed by extrusion, and the fitting grooves 210 on the outer surface thereof may be formed by turning. In FIGS. 2 and 3, the protective layer 240 of the flow path pipe 200 is omitted.

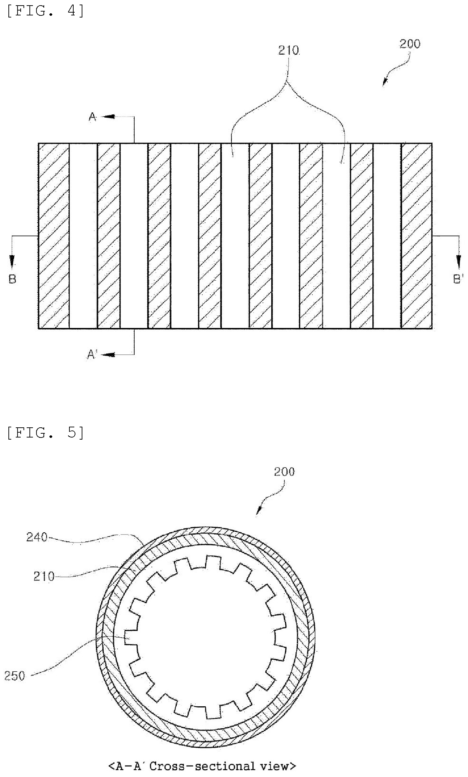

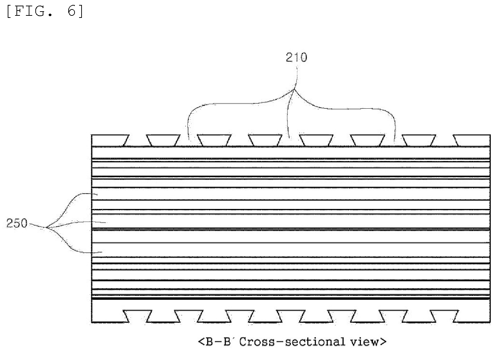

That is, as shown in FIG. 2, the flow path pipe 200 is formed by metal extrusion processing. In this case, as shown in FIG. 4, sawtooth-shaped grooves 250 formed on an inner surface of the flow path pipe 200 may be simultaneously formed. The sawtooth-shaped grooves 250 formed inside the flow path pipe 200 serve to improve heat transfer by increasing a heat transfer area with which the heated fluid comes into contact. In addition, as shown in FIG. 3, a plurality of concave grooves are formed at predetermined intervals on the outer surface of the extruded flow path pipe 200 by turning, and these concave grooves correspond to the fitting grooves 210 into which the heater rings 220 are inserted.

Although not shown in the drawings, a plurality of heater rings 220 inserted into the fitting grooves 210 may be electrically connected to each other in series or in parallel by power supply lines.

That is, a power supply line connected to an external power source may be introduced through the connector 160 shown in FIG. 1 and may be installed along an inner wall of the heater body adjacent to the flow path pipe 200. For example, the power supply line may be connected through a long hole (not shown) or may be connected by forming a separate space (not shown) on an outer portion of the flow path pipe 200, and may be connected to the external power source through the connector 160 shown in FIG. 1.

Also, as illustrated in FIG. 5, the heater ring and the fitting groove 210 of the above-described flow path pipe 200 have an interference-fit coupling structure. That is, the heater ring 220 is inserted into the fitting groove 210 having an opening formed to be relatively narrower than an inner portion thereof, thereby preventing the heater ring 220 from being easily detached or displaced. In FIG. 5, the protective layer 240 of the flow path pipe 200 is omitted from illustration.

That is, the heater ring 220 functions as a heating element by generating heat when power is applied thereto as an electrical element having electrical resistance. By forming an entrance portion of the fitting groove 210 of the flow path pipe 200 to be relatively narrower so that the heater ring is prevented from being displaced or being detached from the fitting groove 210, the heater ring can be firmly mounted by pressure during an interference-fitting process, and a fluid inside the flow path pipe 200 can be normally heated.

As described above, the flow path pipe 200 is intended to effectively heat a fluid flowing therein, and for this purpose, a material of the flow path pipe 200 may include any one selected from aluminum, copper, or an alloy of these metals having high thermal conductivity.

In addition, as illustrated in FIG. 4, a separate protective layer 240 may be formed on the outer surface of the flow path pipe 200 to protect the heater ring 220 inserted into the fitting groove 210 and to prevent detachment thereof. Furthermore, the protective layer 240 may be formed of a thermal insulating material to maintain heat of the heated flow path pipe 200.

As shown in FIG. 4, a plurality of sawtooth-shaped grooves 250 may be formed on the inner surface of the flow path pipe 200 to extend in the longitudinal direction, and the plurality of grooves 250 may be densely arranged in a circumferential direction of the flow path pipe 200.

That is, as described above, the reason for forming the sawtooth-shaped grooves 250 on the inner surface of the flow path pipe 200 to extend in the longitudinal direction is to increase a heat transfer area of the fluid in contact therewith. Accordingly, a heat transfer effect caused by heating may be enhanced.

In addition, in order to increase a contact area of the fluid heated within the flow path pipe 200, a plurality of micro concave portions or micro convex portions having a groove shape may be formed on the inner surface of the flow path pipe 200 in addition to the sawtooth-shaped grooves.

While preferred embodiments of the present invention have been described above with reference to the accompanying drawings, the embodiments described herein and the configurations illustrated in the drawings are merely exemplary embodiments of the present invention and do not represent all technical ideas of the present invention. Accordingly, it should be understood that various equivalents and modifications may be made thereto at the time of filing of the present application. Therefore, the embodiments described above are illustrative in all respects and are not to be construed as limiting, and the scope of the present invention is defined by the claims set forth below rather than by the foregoing detailed description, and all changes or modifications derived from the meaning and scope of the claims and their equivalents should be construed as being included within the scope of the present invention.

### [Description of Reference Numerals]

100: Heater body, 105: Lower surface of heater body, 110: Upper cover, 120: Lower cover, 130: Flow path, 131: Straight flow path, 132: Curved flow path, 135: Partition wall, 140: Fluid inlet port, 150: Fluid outlet port, 160: Connector, 200: Flow path pipe, 210: Heater ring fitting groove, 220: Heater ring, 225: Power terminal, 240: Protective layer, 250: Sawtooth-shaped groove, 300: Heater

## Claims

1. A high-voltage heater for an electric vehicle having a heat-generating flow path structure of a heater ring, the high-voltage heater comprising:
a zigzag flow path pipe installed in a flow path formed on an inner lower surface of a heater body;
a plurality of heater rings inserted into a plurality of fitting grooves of the flow path pipe and configured to generate heat by power supplied from an external source; and
a protective layer formed on an upper portion of the flow path pipe to protect the plurality of heater rings,
wherein the zigzag flow path pipe includes a plurality of straight flow paths and a plurality of curved flow paths.

2. The high-voltage heater according to claim 1, wherein the flow path pipe is made of metal and is formed by extrusion, and the fitting grooves on an outer surface thereof are formed by turning.

3. The high-voltage heater according to claim 1, wherein the plurality of heater rings are electrically connected to each other in series or in parallel by power supply lines.

4. The high-voltage heater according to claim 1, wherein the heater ring and the fitting groove of the flow path pipe have an interference-fit coupling structure, and the heater ring is inserted into the fitting groove having an opening formed to be relatively narrower than an inner portion thereof, thereby preventing the heater ring from being easily detached or displaced.

5. The high-voltage heater according to claim 1, wherein a material of the flow path pipe includes any one selected from aluminum, copper, or an alloy of these metals having high thermal conductivity.

6. The high-voltage heater according to claim 1, wherein the protective layer of the flow path pipe includes an insulating material.

7. The high-voltage heater according to claim 2, wherein a plurality of sawtooth-shaped grooves are formed on an inner surface of the flow path pipe to extend in a longitudinal direction, and the plurality of grooves are densely arranged in a circumferential direction of the flow path pipe.

8. The high-voltage heater according to claim 2, wherein a plurality of micro concave portions or micro convex portions are formed on the inner surface of the flow path pipe.
